## Europäisches Patentamt
## European Patent Office
## Office européen des brevets

(19)

(11) Publication number: **0 215 023**
**B1**

# (12) EUROPEAN PATENT SPECIFICATION

(45) Date of publication of patent specification: **05.12.90**

(21) Application number: **86901237.7**

(22) Date of filing: **30.01.86**

(88) International application number:
**PCT/US86/00212**

(87) International publication number:
**WO 86/05622 25.09.86 Gazette 86/21**

(51) Int. Cl.⁵: **G 11 B 23/28,** G 11 B 20/00,
G 11 B 27/30

(54) **MAGNETIC TAPE CASSETTE HAVING A PRERECORDED LOW FREQUENCY TONE.**

(30) Priority: **18.03.85 US 712670**

(43) Date of publication of application:
**25.03.87 Bulletin 87/13**

(45) Publication of the grant of the patent:
**05.12.90 Bulletin 90/49**

(84) Designated Contracting States:
**DE FR GB IT**

(56) References cited:
**WO-A-81/03591**
**WO-A-82/02111**
**DE-A-2 448 445**
**DE-A-2 705 182**
**FR-A-2 288 369**
**US-A-3 883 892**

(73) Proprietor: **McWHIRTER HOLDINGS PTY
LIMITED
23 Anembo Road
Berowra New South Wales 2081 (AU)**

(72) Inventor: **KNOWD, Michael, J.
P.O. Box 33427
Saint Paul, MN 55133-3427 (US)**

(74) Representative: **Baillie, Iain Cameron et al
c/o Ladas & Parry Isartorplatz 5
D-8000 München 2 (DE)**

Courier Press, Leamington Spa, England.

## Description

Technical field

This invention relates to a method of ensuring authenticity of recorded information.

There are situations where it is desirable that a conversation or verbal statement be recorded on magnetic tape for playback at a later date with provision made for determining whether there has been an erasure of any of the previously recorded conversation or verbal statement. One such situation is presented when it is contemplated that a tape recorded conversation will be used later in a legal proceeding where the authenticity of the recording may be challenged. An objection might be made to the recording in such proceeding on the basis of a showing that events subsequent to the recording presented an opportunity for erasure of some of the original recording or for erasure plus a subsequent recording. It is desirable that a way be found to show that the recording has not been changed to overcome such an objection.

It is known from FR—A—2288369 that a magnetic recording tape may have a permanent magnetic pattern along the length of the tape that is established during manufacture of the tape with such permanentness being relied on to detect any effort that might be made to edit or forcify recording using the tape, the magnetic pattern having a frequency of 70 hertz or less. The requirement for a permanent magnetic pattern has to disadvantage that a special form of magnetic tape is required in which the magnetic particles have a particular orientation in which the magnetic remanence copies of the magnetic articles forms a pre-determined pattern. Such a tape is relatively expensive to produce.

Disclosure of invention

It is a principal objection of this invention to provide a method of ensuring authenticity of recorded information in which the requirement for a permanent magnetic pattern is avoided.

According to this invention there is provided a method of ensuring authenticity of recorded information on a length of magnetic recording tape wherein a continuous, single frequency signal of frequency 60 hertz or less is pre-recorded along the recordable length of the magnetic recording tape characterized by the step of pre-recording the single frequency signal as an erasable signal and making a recording using the pre-recorded tape in a tape recorder that does not provide for erasure of a recording on the pre-recorded tape during recording.

By use of a pre-recorded low frequency tone, such tone would not be readily detected if it were played back prior to recording and such tone would not interfere with audio signals subsequently recorded on the tape. The low frequency tone is available for detection subsequent to any recording made using the cassette tape in a recorder that does not provide an erasing function of the tape during a recording operation, thereby providing a way for determining whether any portion of the tape was erased subsequent to the recording made of a conversation or verbal statement.

Brief description of the drawings

A better understanding of this invention including its novel features and utility will be obtained upon the consideration of the following detailed description and accompanying drawings wherein:—

Figure 1 is a showing of a tape cassette having a recordable length of magnetic recording tape; and

Figure 2 is a showing of circuitry in block diagram form for detecting the presence of a single frequency signal recorded on a tape cassette of the type shown in Figure 1.

Detailed description

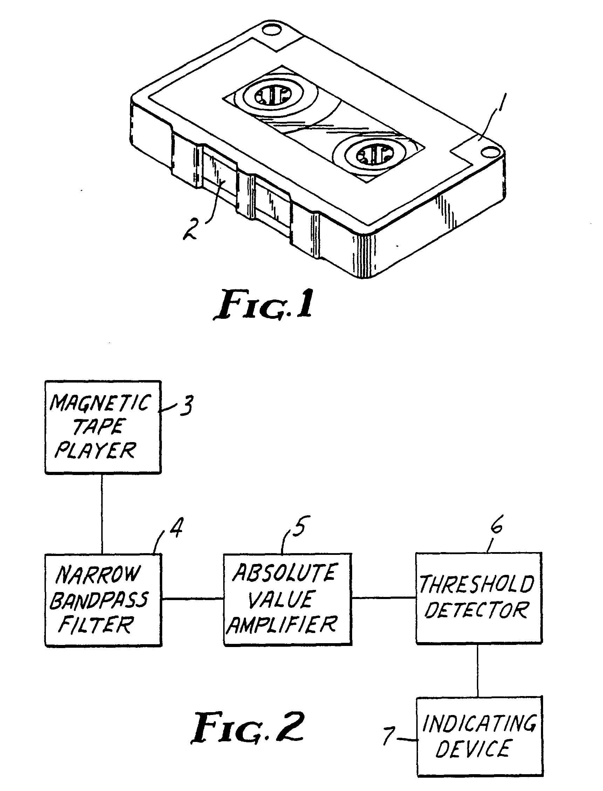

Referring to Figure 1 of the drawings, a tape cassette 1 is shown that is of the type that is usable for the practice of the invention disclosed herein. Tape cassettes of the type shown in Figure 1 are available from a number of manufacturers and are suitable for use with known cassette tape recorders. The tape cassette 1, as is known, includes a recordable length of magnetic recording tape, a portion of which is shown at 2. The invention is embodied in a tape cassette of the type shown in Figure 1, wherein the tape 2 contains a recording of a single, continuous low frequency signal that is recorded along the full length of the tape with the tape cassette provided for use with a cassette tape recorder that does not provide a pre-record erase function. The pre-recorded single frequency signal on the tape will remain on the tape and will be available for detection subsequent to any recording made with the tape cassette using such a cassette tape recorder.

A tape cassette having a low frequency signal that has been pre-recorded on the recording tape is unique with respect to its use as a recording tape in a tape recorder that does not erase the pre-recorded low frequency signal during a record operation. It is useful in that it provides a tape cassette that can be used for recording a conversation or verbal statement to be used at some subsequent time. It serves to provide such a recording wherein the pre-recorded low frequency remains on the tape which can be detected at a time subsequent to the recording made of the conversation or verbal statement to determine whether there has been any tampering of the recording. Any tampering with the recording would result in the creation of a discontinuity in the pre-recorded signal which can be detected. The tape cassette is thus useful for making a recording where the authenticity of the tape may be questioned at some time subsequent to the recording such as in a legal proceeding in which the recording is offered in evidence. For example, a showing that someone had an opportunity to tamper with the recording might be sufficient to cast doubt on the authenticity of the tape. A recording made with a tape cassette of this invention, using a tape recorder that does not have a pre-recording erase function, makes it possible to examine the recording tape to determine whether the tape has been tampered creating a discontinuity in the pre-recorded low frequency.

Figure 2 shows one arrangement whereby a tape cassette of the type described can be examined to determine whether any discontinuity exists in the low frequency signal that is pre-recorded on the recording tape. The arrangement requires a magnetic tape player 3 in which the tape cassette to be examined is placed for playback. The output of the tape player 3 is connected to a narrow bandpass filter 4 which passes only signals at the pre-recorded low frequency. The output of the filter 4 is connected to an absolute value amplifier 5 which provides a full-wave rectified output of the low frequency signal when detected by the filter 4. The output of the amplifier 5 is connected to a threshold detector 6, which serves to require the output of amplifier 5 to be of a predetermined value before threshold detector 6 provides an output. This prevents the possibility of interpreting low level, noise generated signals from appearing at the output of the detector 6 to falsely indicate a pre-recorded low frequency signal is being detected. The output of the threshold detector 6 is connected to an indicating device 7 which can be a light emitting diode. The indication device 7 will thus provide an indication so long as the pre-recorded low frequency signal continues to be detected by the magnetic tape player. If there is no termination of the indication provided by the indicating device 7 during a replay of the cassette tape over the length of the recording, such results could be used to overcome an objection made to the authenticity of a tape recording presented in evidence at a legal proceeding. The objecting party would then have the burden of establishing some other basis for placing the authenticity of the tape recording in question.

It is desirable that the low frequency that is recorded be of a frequency that would not impair the audio signal that would be recorded when recording a conversation or verbal statment. The use of a low frequency that could not be readily detected by most people would be desirable since its presence on the tape would not be readily detected by someone seeking to alter a recorded tape placing such person in the possible position of recording such low frequency on the tape where an alteration of the recording has been made. It is preferred, therefore, that a frequency of 60 Hertz or lower be used for a signal to be pre-recorded on the cassette tape.

**Claim**

A method of ensuring authenticity of recorded information on a length of magnetic recording tape (2) wherein a continuous, single frequency signal of frequency 60 hertz or less is pre-recorded along the recordable length of the magnetic recording tape (2) characterized by the step of pre-recording the single frequency signal as an erasable signal and making a recording using the pre-recorded tape (2) in a tape recorder that does not provide for erasure of a recording on the pre-recorded tape during recording.

**Patentanspruch**

Verfahren zum Gewährleisten der Echtheit von auf einer Länge eines magnetischen Aufzeichnungsbandes (2) aufgezeichneter Information, wobei auf der aufnahmefähigen Länge des magnetischen Aufzeichnungsbandes (2) ein einfrequentes Dauersignal mit einer Frequenz von 60 Hz oder weniger voraufgezeichnet wird, gekennzeichnet durch einen Schritt, in dem das einfrequente Signal als löschbares Signal voraufgezeichnet und zur Herstellung einer Aufzeichnung das mit der Voraufzeichnung versehene Band (2) in einem Bandaufnahmegerät verwendet wird, das bei der Aufnahme kein Löschen einer Aufzeichnung bewirkt, die auf dem mit der Voraufzeichnung versehenen Band vorhanden ist.

**Revendication**

Procédé pour s'assurer de l'authenticité d'une information enregistrée sur une longueur de bande magnétique (2) d'enregistrement, selon lequel on pré-enregistre un signal de fréquence unique, continu, d'une fréquence égale ou inférieure à 60 Hz, sur la longueur enregistrable de la bande magnétique (2) d'enregistrement, caractérisé en ce qu'on pré-enregistre le signal de fréquence unique en tant que signal effaçable et on fait un enregistrement un utilisant la bande pré-enregistrée (2) dans un appareil d'enregistrement de bande qui ne procède pas à l'effaçage d'un enregistrement sur la bande pré-enregistrée pendant l'enregistrement.

**FIG.1**

MAGNETIC TAPE PLAYER — 3

NARROW BANDPASS FILTER — 4

ABSOLUTE VALUE AMPLIFIER — 5

THRESHOLD DETECTOR — 6

INDICATING DEVICE — 7

**FIG.2**